# FASCICULE DE BREVET EUROPEEN

(11) **EP 4 214 453 B1**
(45) Date de publication et mention de la délivrance du brevet: **12.06.2024**
(21) Numéro de dépôt: 21798738.7
(22) Date de dépôt: 16.09.2021
(51) Int. Cl.: F24S 10/50, F24S 70/20

(54) **SYSTÈME DE CHAUFFAGE SOLAIRE**
SOLARHEIZSYSTEM
SOLAR HEATING SYSTEM

(30) Priorité: 18.09.2020 FR 2009456
(43) Date de publication de la demande: 26.07.2023
(73) Titulaire: HIGEL, François, 26200 Montelimar (FR)
(72) Inventeur: HIGEL, François, 26200 Montelimar (FR)
(74) Mandataire: IP Trust
(86) Numéro de dépôt international: PCT/FR2021/051587
(87) Numéro de publication internationale: WO 2022/058688

(56) Documents cités:
- WO-A1-2019/122655
- FR-A3- 2 983 221
- GB-A- 2 023 795
- US-A1- 2012 145 223
- US-A1- 2018 269 828

## Description

### Domaine technique

La présente invention concerne un système de chauffage solaire d'eau sanitaire ou d'un fluide caloporteur de chauffage comprenant au moins un élément de chauffage installé à l'extérieur d'un bâtiment et destiné à recevoir l'énergie solaire pour chauffer par échange de chaleur l'eau sanitaire ou le fluide caloporteur de chauffage, l'élément de chauffage étant sous la forme d'un panneau absorbant la chaleur, le panneau étant formé d'une première plaque et d'une deuxième plaque reliée à la première plaque, la première plaque et la deuxième plaque étant profilées symétriquement de sorte à former entre la première plaque et la deuxième plaque en dehors de zones de contact entre la première plaque et de la deuxième plaque un canal d'écoulement avec une entrée fluidique et une sortie fluidique pour le passage de l'eau sanitaire ou du fluide caloporteur de chauffage à chauffer circulant dans le panneau.

### Technique antérieure

Il est connu de chauffer de l'eau sanitaire ou de chauffage en récupérant l'énergie solaire et de la transmettre à un fluide caloporteur qui peut être de l'eau destinée à être utilisée ou un autre fluide. On connait déjà des systèmes de chauffage solaire de ce type. Ce peut être un matériau métallique pouvant comporter par exemple un dispositif absorbeur constitué d'un tube en cuivre portant une pluralité d'ailettes d'aluminium pour augmenter la surface d'échange. Le tube est généralement monté dans un boitier support laissant un espace jouant un rôle de lame d'air entre le tube qui devient un échangeur de chaleur et une plaque de couverture translucide laissant passer les rayons du soleil et augmentant la température de la lame d'air au contact du tube par effet de serre. Néanmoins, dans des zones géographiques où il gèle, le fluide qui s'écoule dans le tube peut être constitué d'un mélange d'eau et d'un produit antigel ce qui nécessite l'installation d'un deuxième échangeur de chaleur en contact cette fois avec l'eau chaude sanitaire à utiliser.

Dans le cas d'un système de chauffage tel que décrit ci-dessus, il est possible d'utiliser directement le fluide caloporteur circulant dans le tube pour la circulation dans des radiateurs de chauffage. Le système de chauffage nécessitera donc de la maintenance particulière. Dans le cadre de systèmes de chauffage avec une structure principalement métallique, la fabrication de ces systèmes est rendue complexe par des problèmes d'assemblage et de soudure. Le poids de l'ensemble est élevé ce qui entraine des contraintes pour l'installation de ces systèmes par exemple sur les toitures de bâtiment. De plus, ces systèmes sont souvent épais.

Les industriels ont alors cherché à développer des systèmes plus légers, plus minces, plus faciles à installer. Ainsi le document FR2787868 décrit un système de capteur solaire pour chauffer un fluide caloporteur avec un boitier support présentant une plaque de recouvrement translucide, le boitier ayant une paroi inférieure et des parois latérales réalisées en une matière synthétique composite moulée. Dans le boitier, le système pour échanger la chaleur avec le fluide caloporteur est constitué d'une plaque nervurée aussi en matière synthétique composite moulée absorbant la chaleur et définissant un canal d'écoulement pour le passage de l'eau sanitaire à chauffer, en laissant subsister un écartement par rapport à la plaque de recouvrement translucide. Des plaques en matériau synthétique moulées peuvent aussi être assemblées entre elle par thermoformage et former un panneau, dans lequel l'eau sanitaire ou de chauffage, comme fluide caloporteur, circule. Néanmoins, ce genre de système en matériau synthétique est souvent associé à un isolant qui emmagasine la chaleur au détriment de l'eau sanitaire ou de chauffage à chauffer.

Les documents FR 2 983 221, GB 2 023 795 et US 2012/0145223 décrivent des exemples de dispositifs utilisant l'énergie solaire qui peuvent être utilisé pour transférer de la chaleur à un fluide.

Afin de répondre aux contraintes géographiques pour assurer une utilisation en hiver pour le chauffage d'un bâtiment comme en été pour le chauffage des eaux d'une piscine par exemple, les industriels ont cherché à développer de nouveaux systèmes de chauffage solaire d'eau sanitaire ou de chauffage ne présentant pas les inconvénients cités ci-dessus.

### Exposé de l'invention

Le but de l'invention est de proposer un nouveau système de chauffage solaire d'eau sanitaire ou de chauffage présentant une haute performance énergétique, un grand confort, avec une facilité et une rapidité d'installation.

A cet effet, l'invention a pour objet un système de chauffage solaire d'eau sanitaire ou d'un fluide caloporteur de chauffage comprenant au moins un élément de chauffage installé à l'extérieur d'un bâtiment et destiné à recevoir de l'énergie solaire pour chauffer par échange de chaleur l'eau sanitaire ou le fluide caloporteur de chauffage, l'élément de chauffage étant sous la forme d'un panneau absorbant la chaleur, le panneau étant formé d'une première plaque et d'une deuxième plaque reliée à la première plaque, la première plaque et la deuxième plaque étant profilées symétriquement de sorte à former entre la première plaque et la deuxième plaque en dehors de zones de contact entre la première plaque et de la deuxième plaque un canal d'écoulement avec une entrée fluidique et une sortie fluidique pour le passage de l'eau sanitaire ou du fluide caloporteur de chauffage à chauffer circulant dans le panneau, caractérisé en ce que la première plaque et la deuxième plaque sont des plaques embouties en acier et sont reliées entre elles par soudure sur toute la surface des zones de contact entre la première plaque et de la deuxième plaque, en ce que la soudure entre les plaques est une soudure par laser, et en ce que une texture de surface obtenue par traitement laser est présente sur au moins une de la première plaque ou de la deuxième plaque, et en ce que la texture de surface obtenue par traitement laser est présente sur une surface externe de la première plaque ou la deuxième plaque du panneau, la surface externe étant apte à recevoir l'énergie solaire.

L'invention peut encore présenter les particularités suivantes :
- la texture de surface obtenue par traitement laser peut être aussi présente sur une surface en contact avec l'eau sanitaire ou le fluide caloporteur de chauffage d'au moins une de la première plaque et/ou de la deuxième plaque pour augmenter la surface d'échange de chaleur entre le panneau et l'eau sanitaire ou le fluide caloporteur de chauffage à chauffer ;
- le canal d'écoulement peut être agencé en serpentin ;
- la première plaque et la deuxième plaque peuvent avoir chacune une épaisseur dans la plage de 1 à 5 mm ;
- le canal d'écoulement peut présenter une largeur dans la plage de 3 à 10 cm et une hauteur dans la plage de 2 à 4 mm ;
- une extrémité du canal d'écoulement d'un panneau connectée avec l'entrée fluidique et l'autre extrémité du canal d'écoulement du panneau connectée à la sortie fluidique du panneau peuvent être connectables à un système d'alimentation en eau sanitaire à chauffer ou un système de circulation en fluide caloporteur de chauffage à chauffer ;
- plusieurs panneaux peuvent être fluidiquement connectables entre eux ;
- des moyens de fixation peuvent être agencés en bordure du panneau pour le monter sur des éléments de support structural ;
- l'élément de chauffage sous forme de panneau peut être combiné avec un panneau photovoltaïque de sorte à récupérer de la chaleur du panneau photovoltaïque dans le panneau. L'invention peut s'étendre à l'utilisation d'un système de chauffage solaire selon l'invention pour le chauffage des eaux d'une piscine.

L'invention peut encore s'étendre à un chauffe-eau solaire, qui comprend un système de chauffage solaire selon l'invention qui est associé à un réservoir de collecte de l'eau sanitaire chauffée.

Selon l'invention, le système de chauffage est très performant. En effet l'élément de chauffage sous forme de panneau en acier récupère plus d'énergie solaire à transmettre à un liquide à chauffer, tel que l'eau, que les systèmes de chauffage solaire de l'art antérieur avec des tubes espacés ou des matériaux synthétiques. De part la faible épaisseur des plaques et du faible volume intérieur du canal, et donc du liquide à chauffer, il y a une très faible inertie de chauffage. L'installation est facilité et avec une rapidité de pose qui la rend accessible aux non professionnels de par le design du panneau et son faible poids.

De part la configuration embouties des plaques, la soudure laser des plaques en acier garantie la fixation des plaques l'une à l'autre ainsi que l'étanchéité du panneau.

La modification de surface par traitement laser de la surface externe et / ou interne d'au moins une des plaques du panneau, notamment la surface externe face au rayonnement solaire permet de créer une sorte de texture de surface qui augmente la capacité d'absorption de chaleur du soleil du panneau de sorte à augmenter le rendement de l'élément de chauffage par rapport à une plaque non traitée au laser.

Enfin, l'élément de chauffage en acier inoxydable permet d'utiliser le système de chauffage pour chauffer de l'eau sanitaire, de l'eau d'une piscine ou n'importe quel fluide caloporteur. Avantageusement, l'utilisation de l'eau comme fluide caloporteur de chauffage permet de limiter l'entretien du système de chauffage.

### Description sommaire des dessins

La présente invention sera mieux comprise et d'autres caractéristiques et avantages apparaîtront à la lecture de la description détaillée des modes de réalisation pris à titre d'exemples nullement limitatifs et illustrés par les dessins annexés dans lesquels :
[Fig.1] - la figure 1 est une illustration schématique d'un élément d'échange de chaleur sous forme de panneau du système de chauffage solaire selon l'invention avec des vues selon trois coupes A-A, B-B et C-C ;
[Fig.2] - la figure 2 est une illustration schématique de plusieurs éléments de chauffage sous forme de panneau du système de chauffage solaire selon l'invention agencés sur un toit d'une habitation ;
[Fig.3] - la figure 3 est une illustration schématique d'un toit d'une habitation sur lequel un système de chauffage solaire selon l'invention est en court d'installation avec plusieurs panneaux connectés les uns aux autres ;
[Fig.4] - la figure 4 est un agrandissement de la surface externe texturisée d'un élément de chauffage sous forme de panneau du système de chauffage solaire selon l'invention ;
[Fig.5] - la figure 5 est une illustration schématique d'un élément de chauffage sous forme de panneau du système de chauffage solaire selon l'invention coopérant avec un panneau solaire photovoltaïque ;
[Fig.6] - la figure 6 est une illustration schématique d'un système de chauffage solaire selon l'invention avec plusieurs éléments de chauffage sous forme de panneau connectés en eux et agencés en série.

### Description des modes de réalisation

La présente invention a trait au domaine du chauffage solaire afin de récupérer de l'énergie solaire du rayonnement solaire et de la transmettre à de l'eau sanitaire ou à un fluide caloporteur de chauffage. L'invention est plus particulièrement dédiée à un système de chauffage solaire pour chauffer directement l'eau sanitaire ou le fluide caloporteur de chauffage, à partir d'un élément de chauffage installé à l'extérieur d'un bâtiment de sorte à récupérer l'énergie solaire, et cela sans avoir à utiliser de système intermédiaire d'échangeur de chaleur.

Le principe général est d'utiliser l'énergie solaire reçue par l'élément de chauffage dans lequel circule l'eau sanitaire ou le fluide caloporteur de chauffage à chauffer, afin de limiter l'impact environnemental par rapport à des systèmes de chauffage actuels polluants.

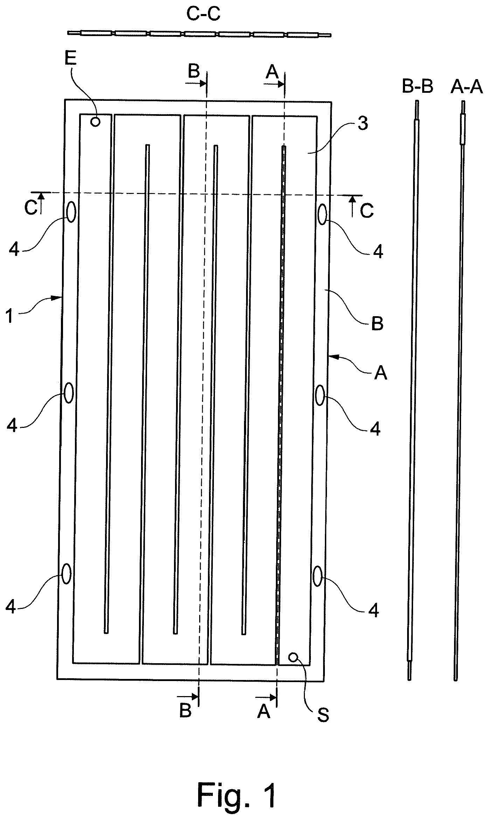

Selon l'invention, l'élément de chauffage est sous forme d'un panneau 1 du type de celui illustré sur la figure 1. Sans restriction de taille, le panneau 1 illustré sur la figure 1 mesure environ 1 mètre sur 0,5 mètre. Le panneau 1 comprend une première plaque A et une deuxième plaque B reliée à la première plaque A.

Pour des raisons de compréhensions mais sans présenter de limitation à la présente invention, la première plaque A sera dite inférieure, la deuxième plaque B sera dite supérieure, la plaque supérieure étant celle orientée en direction du ciel pour récupérer l'énergie solaire.

La première A et la deuxième plaque B sont en acier, de préférence en acier inoxydable. Les plaques A, B sont profilées et peuvent être obtenues par emboutissage de sorte à former localement un relief sur la première plaque A et la deuxième plaque B, l'emboutissage permettant de créer des formes plus anguleuses par rapport à d'autres méthodes connues de mise en forme de plaque. De préférence, comme illustré sur la figure 1, la première plaque A et la deuxième plaque B sont embouties de façon symétrique de sorte que, lorsque la première plaque A et la deuxième plaque B sont superposées l'une face à l'autre pour former le panneau 1, à créer des zones de contact entre elles par lesquelles la première plaque A et la deuxième plaques B seront reliées, et des zones sans contact qui forment une sorte de canal 3 d'écoulement pour le passage de l'eau sanitaire ou du fluide caloporteur de chauffage à chauffer.

Selon l'invention, pour relier la première plaque A et la deuxième plaque B de façon étanche et ainsi former un volume fermé pour la circulation de l'eau sanitaire ou du fluide caloporteur de chauffage dans le panneau 1 entre une entrée E fluidique et une sortie S fluidique, de préférence agencées sur la deuxième plaque B supérieure, la première plaque A et la deuxième plaque B sont soumises à une soudure au laser sur les zones de contact. Ainsi, la soudure au laser s'effectue sur les bords de la première plaque A et de la deuxième plaque B et entre les zones embouties formant le relief qui est orienté vers l'extérieur du panneau comme visible sur les coupes A-A, B-B et C-C de la figure 1.

Le canal 3 d'écoulement entre l'entrée E et la sortie S est ici agencé en serpentin. Avantageusement, l'eau sanitaire ou le fluide caloporteur de chauffage vient en contact direct avec le panneau 1 chauffé grâce au rayonnement solaire et la configuration en serpentin permet de diriger l'eau sanitaire ou le fluide caloporteur de chauffage pour que la circulation couvre pratiquement la totalité de la surface interne du panneau 1.

Selon l'invention, la première plaque A et la deuxième plaque B ont chacune une épaisseur choisie dans la plage de 1 à 5 mm, permettant de créer le canal 3 d'écoulement en serpentin s'étendant longitudinalement et présentant par exemple une largeur comprise dans la plage de 3 à 10 cm et une hauteur comprise dans la plage de 2 à 4 mm.

Pour connecter l'élément de chauffage sous forme de panneau 1 à un système d'alimentation en eau sanitaire ou à un système de circulation de fluide caloporteur de chauffage, des tubulures peuvent être serties au niveau de l'entrée E fluidique et de la sortie S fluidique du panneau 1, à chaque extrémité du canal 3 d'écoulement.

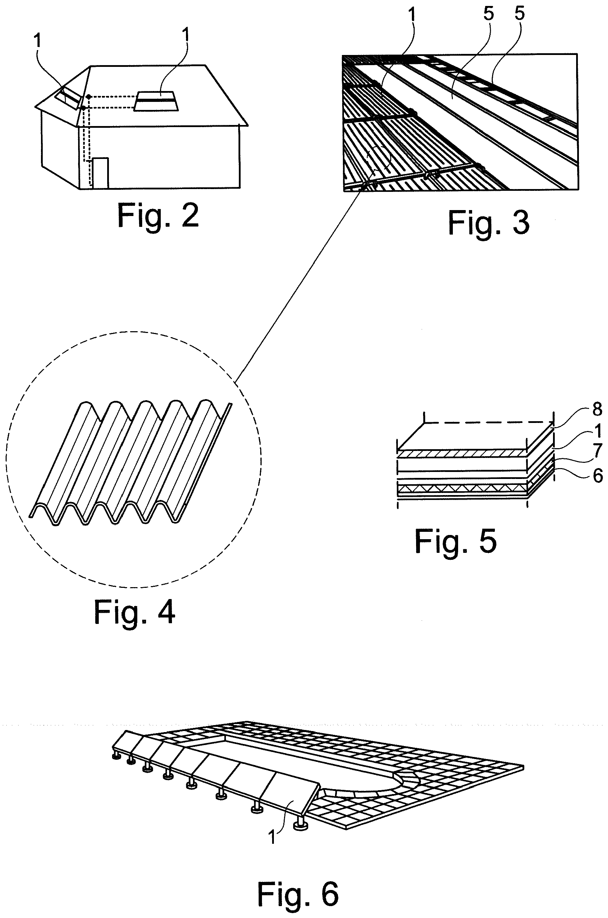

Selon l'invention, des éléments de chauffage sous forme de panneau d'un système de chauffage peuvent être installés sur le toit d'un bâtiment comme cela est illustré sur la figure 2.

Ainsi, le système de chauffage peut être utilisé pour le chauffage individuel, collectif ou d'eau chaude sanitaire. Dans ce dernier cas, le système de chauffage solaire selon l'invention peut être associé à une boucle de régulation et à un ballon ou un réservoir de collecte et de stockage pour emmagasiner l'eau sanitaire chauffée produite.

Sur la figure 3 sont schématisés plusieurs éléments de chauffage connectés fluidiquement entre eux. Pour cela, par exemple une entrée E fluidique d'un premier panneau 1 peut être connecté à une arrivée d'eau sanitaire par un tuyau de raccordement, la sortie S fluidique du premier panneau 1 pouvant être directement connectée en série par un tuyau de raccordement à l'entrée E fluidique d'un deuxième panneau 1 dont la sortie S fluidique peut être connectées par un tuyau de raccordement à l'entrée E fluidique d'un troisième panneau 1 etc., jusqu'à ce que la sortie S fluidique du dernier panneau 1 soit connectée par un tuyau de raccordement à un réservoir de collecte d'eau sanitaire chauffée.

Dans le cas d'un système de chauffage solaire de fluide caloporteur de chauffage, le fluide caloporteur circule par exemple via une pompe de circulation, et le fluide caloporteur de chauffage chauffé peut alimenter directement tout réseau de chauffage utilisant un fluide caloporteur chaud, comme un plancher chauffant, des radiateurs, aérothermes, ventiloconvecteurs etc.

On comprendra que pour l'installation du système de chauffage solaire selon l'invention comme illustré sur la figure 3, des moyens de fixation 4 comme par exemple des trous oblongues visibles sur la figure 1 peuvent être agencés en bordure du panneau 1 pour viser le panneau sur des éléments de support structural 5 tel que par exemple un châssis en bois ou métallique agencé sur la toiture.

Avantageusement, les éléments de chauffage sous forme de panneau 1 d'un système de chauffage solaire selon l'invention peuvent être installés en toiture quelle que soit la configuration du bâtiment, qu'il soit neuf ou en rénovation, que la toiture soit plane ou en pente, que ce soit sur une toiture avec un recouvrement en tuile ou en tôle. Il pourrait aussi être envisagé d'installer un ou plusieurs éléments de chauffage sur le mur d'une façade extérieure ou au sol sur un châssis comme cela est illustré sur la figure 6 ou encore à même le sol.

Selon l'invention, le fait que le panneau 1 soit ultra fin par rapport aux éléments de chauffage de l'art antérieur, un panneau 1 faisant par exemple une taille de 1 mètre sur 0,5 mètre pèse environ 5 kg et peut donc être facilement porté par un seul installateur pour être monté sur une toiture. Les panneaux 1 ne présentant pas de sens particulier d'écoulement fluidique, leur montage sera facilité. Le panneau 1 étant en acier, il est robuste aux conditions environnementales extrêmes, tel que la grêle ou le gel. Il est aussi possible de marcher dessus lorsqu'il est installé en toiture.

De plus, les parois du panneau 1 étant fines, et le volume d'eau sanitaire ou de fluide caloporteur de chauffage à chauffer circulant dans le canal 3 d'écoulement dans le panneau 1 étant limité par la taille réduite du canal 3 par rapport à l'art antérieur, l'eau sanitaire ou le fluide caloporteur de chauffage montent très vite en température, ce qui permet d'utiliser le système de chauffage selon l'invention même si le ciel est voilé.

Selon l'invention, une modification de surface par traitement laser, schématisée par des vagues sur la figure 4 peut être effectuée sur le panneau 1.

La modification de surface par traitement laser apporte une sorte de texturisation de la surface traité de manière à obtenir une texture de surface, et peut être effectuée sur la surface externe de la première plaque A inférieure et/ou de la deuxième plaque B supérieure du panneau 1, de préférence au moins de celle qui sera orientée en direction du ciel pour récupérer l'énergie solaire. Cette modification de surface permet d'augmenter la surface recevant le rayonnement solaire pour récupérer plus d'énergie solaire pour le système de chauffage selon l'invention et ainsi augmenter le rendement de l'élément de chauffage par rapport à un panneau 1 non modifié.

Selon l'invention, une modification de surface par traitement laser peut aussi être effectuée sur la surface interne du panneau 1 en contact avec l'eau sanitaire ou le fluide caloporteur de chauffage. Cette modification de surface s'effectue sur la surface interne de au moins une de la première plaque A inférieure et de la deuxième plaque B supérieure. De préférence cette modification de surface est effectuée sur la face interne de la deuxième plaque B supérieure, de sorte à augmenter la surface d'échange entre l'eau sanitaire ou le fluide caloporteur de chauffage et le panneau 1. En effet, la distance parcourue par l'eau sanitaire ou le fluide caloporteur de chauffage est supérieure sur la première plaque A et/ou la deuxième plaque B modifiée intérieurement que sur la première plaque A et/ou la deuxième plaque B non modifiée. Une telle modification de surface peut par exemple augmenter le rendement de l'élément de chauffage par rapport à un panneau non modifié.

Avantageusement, la texturisation de surface par traitement laser peut être effectuée sur la surface externe et la surface interne du panneau 1.

Avantageusement, le matériau conducteur du panneau 1 d'un système de chauffage solaire, comme l'acier inoxydable, permet de chauffer de l'eau mais aussi l'utilisation de n'importe quel fluide caloporteur de chauffage. Le fluide caloporteur de chauffage peut être de l'eau ou tout autre liquide antigel comme du glycol.

Dans le cas où le fluide caloporteur de chauffage est de l'eau ou que le système de chauffage sert à chauffer de l'eau sanitaire, les procédures d'entretien de l'installation peuvent avantageusement se limiter à par exemple un simple rinçage à contre-courant du panneau 1. De plus, le panneau étant étanche à l'air et le matériau du panneau étant en acier inoxydable il n'y a aucun risque d'oxygénation de l'eau ou bien du fluide.

Pour encore augmenter le rendement du système de chauffage solaire selon l'invention, comme illustré sur la figure 3, un isolant déflecteur peut être installé en dessous des éléments de chauffage sous forme de panneau 1, de préférence en laissant un lame d'air entre l'isolant déflecteur et le panneau 1, de sorte que l'isolant n'emmagasine pas la chaleur du panneau 1 mais au contraire la renvoie vers le panneau 1.

Il pourrait être aussi envisagé de combiner un élément de chauffage sous forme de panneau d'un système de chauffage solaire selon l'invention à un panneau photovoltaïque. En effet, il est connu qu'un panneau photovoltaïque au delà d'une température de 25°C n'est pas plus efficace qu'un panneau photovoltaïque à 25°C. Il est alors intéressant de récupérer la chaleur accumulée du panneau photovoltaïque pour chauffer un élément de chauffage sous forme de panneau 1 du système de chauffage solaire selon l'invention. Un exemple de montage est illustré sur la figure 5. Il pourrait ainsi être assemblé sur un châssis prêt à être installé sur une toiture, une tôle 6 par exemple en aluminium sur laquelle repose un isolant déflecteur 7, séparée par une lame d'air d'un élément de chauffage sous forme de panneau 1, ce dernier étant lui-même séparée par une lame d'air d'un panneau photovoltaïque 8. La chaleur accumulée par le panneau photovoltaïque 8 par le rayonnement solaire est ainsi transmise au panneau 1 dans lequel circule par exemple un fluide caloporteur de chauffage, ce qui peut être suffisant pour alimenter le système de chauffage si celui-ci est à basse température. Dans cette configuration, c'est un chauffage solaire indirect qui est créé et le système de chauffage selon l'invention sert en même temps de refroidisseur de panneaux photovoltaïques.

Le système de chauffage solaire selon l'invention peut aussi être utilisé en mi-saison ou en saison estivale pour chauffer l'eau d'une piscine comme cela est illustré sur la figure 6. Un ou plusieurs éléments de chauffage sous forme de panneau d'un système de chauffage selon l'invention peuvent tout à fait être couplés à une filtration de l'eau de la piscine. En effet, de l'eau d'une piscine peut circuler dans le canal 3 d'écoulement d'un panneau 1 sans que par exemple le chlore n'attaque l'intérieur du panneau 1 en acier inoxydable. Sur la figure 6, plusieurs panneaux 1 sont assemblés et connectés en série.

On comprendra que le système de chauffage solaire selon l'invention présente une haute performance énergétique, et il n'est pas polluant. L'installation est très facile et rapide. Il va de soi que la présente invention ne saurait être limitée au mode de réalisation exposé plus haut, susceptible de subir des modifications sans pour autant sortir du cadre de l'invention.

## Revendications

1. Système de chauffage solaire d'eau sanitaire ou d'un fluide caloporteur de chauffage comprenant au moins un élément de chauffage installé à l'extérieur d'un bâtiment et destiné à recevoir l'énergie solaire pour chauffer par échange de chaleur ladite eau sanitaire ou ledit fluide caloporteur de chauffage, ledit élément de chauffage étant sous la forme d'un panneau (1) absorbant ladite chaleur, ledit panneau (1) étant formé d'une première plaque (A) et d'une deuxième plaque (B) reliée à ladite première plaque (A), ladite première plaque (A) et ladite deuxième plaque (B) étant profilées symétriquement de sorte à former entre ladite première plaque (A) et ladite deuxième plaque (B) en dehors de zones de contact entre ladite première plaque (A) et de ladite deuxième plaque (B) un canal (3) d'écoulement avec une entrée (E) fluidique et une sortie (S) fluidique pour le passage de ladite eau sanitaire ou dudit fluide caloporteur de chauffage à chauffer circulant dans ledit panneau (1), dans lequel ladite première plaque (A) et ladite deuxième plaque (B) sont des plaques embouties en acier et sont reliées entre elles par soudure sur toute la surface desdites zones de contact entre ladite première plaque (A) et de ladite deuxième plaque (B), dans lequel ladite soudure entre lesdites plaques (A, B) est une soudure par laser, **caractérisé en ce que** une texture de surface obtenue par traitement laser est présente sur au moins une de ladite première plaque (A) ou de ladite deuxième plaque (B), et **en ce que** ladite texture de surface obtenue par traitement laser est présente sur une surface externe de ladite première plaque (A) ou de ladite deuxième plaque (B) dudit panneau (1), ladite surface externe étant apte à recevoir ladite énergie solaire.

2. Système de chauffage solaire selon la revendication 1, **caractérisé en ce que** ladite texture de surface obtenue par traitement laser est aussi présente sur une surface en contact avec ladite eau sanitaire ou ledit fluide caloporteur de chauffage d'au moins une de ladite première plaque (A) et/ou de ladite deuxième plaque (B) pour augmenter la surface d'échange de chaleur entre ledit panneau (1) et ladite eau sanitaire ou ledit fluide caloporteur de chauffage à chauffer.

3. Système de chauffage solaire selon au moins l'une des revendications précédentes, **caractérisé en ce que** ledit canal (3) d'écoulement est agencé en serpentin.

4. Système de chauffage solaire selon au moins l'une des revendications précédentes, **caractérisé en ce que** ladite première plaque (A) et ladite deuxième plaque (B) ont chacune une épaisseur dans la plage de 1 à 5 mm.

5. Système de chauffage solaire selon au moins l'une des revendications précédentes, **caractérisé en ce que** ledit canal (3) d'écoulement présente une largeur dans la plage de 3 à 10 cm et une hauteur dans la plage de 2 à 4 mm.

6. Système de chauffage solaire selon au moins une des revendications précédentes, **caractérisé en ce qu'**une extrémité dudit canal (3) d'écoulement d'un panneau (1) connectée avec ladite entrée (E) fluidique et que l'autre extrémité dudit canal (3) d'écoulement dudit panneau (1) connectée à ladite sortie (S) fluidique dudit panneau (1) sont connectables à un système d'alimentation en eau sanitaire à chauffer ou un système de circulation en fluide caloporteur de chauffage à chauffer.

7. Système de chauffage solaire selon au moins l'une des revendications précédentes, **caractérisé en ce que** plusieurs panneaux (1) sont fluidiquement connectables entre eux.

8. Système de chauffage solaire selon au moins l'une des revendications précédentes, **caractérisé en ce que** des moyens de fixation (4) sont agencés en bordure dudit panneau (1) pour le monter sur des éléments de support structural.

9. Système de chauffage solaire selon au moins une des revendications précédentes, **caractérisé en ce que** ledit élément de chauffage sous forme de panneau (1) est combiné avec un panneau photovoltaïque (8) de sorte à récupérer de la chaleur dudit panneau photovoltaïque dans le panneau (1).

10. Utilisation d'un système de chauffage solaire selon au moins l'une des revendications 1 à 9 pour le chauffage des eaux d'une piscine.

11. Chauffe-eau solaire, **caractérisé par le fait qu'**il comprend un système de chauffage solaire selon au moins l'une des revendications 1 à 9 associé à un réservoir de collecte de l'eau sanitaire chauffée.

## Patentansprüche

1. System zum Solarheizen von Brauchwasser oder eines wärmeübertragenden Heizfluids, umfassend mindestens ein Heizelement, das außerhalb eines Gebäudes installiert ist und dafür bestimmt ist, Solarenergie aufzunehmen, um durch Wärmeaustausch das Brauchwasser oder das wärmeübertragende Heizfluid zu erhitzen, wobei das Heizelement in Form eines Paneels (1) vorliegt, das die Wärme absorbiert, wobei das Paneel (1) aus einer ersten Platte (A) und einer zweiten Platte (B), die mit der ersten Platte (A) verbunden ist, ausgebildet ist, wobei die erste Platte (A) und die zweite Platte (B) symmetrisch profiliert sind, um zwischen der ersten Platte (A) und der zweiten Platte (B) außerhalb von Kontaktbereichen zwischen der ersten Platte (A) und der zweiten Platte (B) einen Strömungskanal (3) mit einem Fluideinlass (E) und einem Fluidauslass (S) für den Durchgang des zu erhitzenden Brauchwassers oder wärmeübertragenden Heizfluids, das in dem Paneel (1) zirkuliert, auszubilden, wobei die erste Platte (A) und die zweite Platte (B) tiefgezogene Stahlplatten sind und durch Schweißen über die gesamte Oberfläche der Kontaktbereiche zwischen der ersten Platte (A) und der zweiten Platte (B) miteinander verbunden sind, wobei das Schweißen zwischen den Platten (A, B) ein Laserschweißen ist,
**dadurch gekennzeichnet, dass** eine Oberflächentextur, die durch Laserbehandlung erhalten wird, auf mindestens einer von der ersten Platte (A) oder der zweiten Platte (B) vorhanden ist, und **dass** die Oberflächentextur, die durch Laserbehandlung erhalten wird, auf einer Außenoberfläche der ersten Platte (A) oder der zweiten Platte (B) des Paneels (1) vorhanden ist, wobei die Außenoberfläche geeignet ist, die Solarenergie aufzunehmen.

2. Solarheizsystem nach Anspruch 1, **dadurch gekennzeichnet, dass** die Oberflächentextur, die durch Laserbehandlung erhalten wird, auch auf einer Oberfläche vorhanden ist, die mit dem Brauchwasser oder dem wärmeübertragenden Heizfluid von mindestens einer von der ersten Platte (A) und/oder der zweiten Platte (B) in Kontakt steht, um die Wärmeaustauschoberfläche zwischen dem Paneel (1) und dem zu erwärmenden Brauchwasser oder wärmeübertragenden Heizfluid zu vergrößern.

3. Solarheizsystem nach mindestens einem der vorstehenden Ansprüche, **dadurch gekennzeichnet, dass** der Strömungskanal (3) serpentinenartig angeordnet ist.

4. Solarheizsystem nach mindestens einem der vorstehenden Ansprüche, **dadurch gekennzeichnet, dass** die erste Platte (A) und die zweite Platte (B) jeweils eine Dicke in dem Bereich von 1 bis 5 mm besitzen.

5. Solarheizsystem nach mindestens einem der vorstehenden Ansprüche, **dadurch gekennzeichnet, dass** der Strömungskanal (3) eine Breite in dem Bereich von 3 bis 10 cm und eine Höhe in dem Bereich von 2 bis 4 mm aufweist.

6. Solarheizsystem nach mindestens einem der vorstehenden Ansprüche, **dadurch gekennzeichnet, dass** ein Ende des Strömungskanals (3) eines Paneels (1), das mit dem Fluideinlass (E) verbunden ist, und das andere Ende des Strömungskanals (3) der Paneel (1), das mit dem Fluidauslass (S) des Paneels (1) verbunden ist, mit einem Versorgungssystem für zu erhitzendes Brauchwasser oder einem Zirkulationssystem für zu erhitzendes wärmeübertragenden Heizfluid verbindbar sind.

7. Solarheizsystem nach mindestens einem der vorstehenden Ansprüche, **dadurch gekennzeichnet, dass** mehrere Paneele (1) fluidisch miteinander verbindbar sind.

8. Solarheizsystem nach mindestens einem der vorstehenden Ansprüche, **dadurch gekennzeichnet, dass** die Befestigungsmittel (4) an einer Umrandung des Paneels (1) angeordnet sind, um diese auf den tragenden Bauteilen zu montieren.

9. Solarheizsystem nach mindestens einem der vorstehenden Ansprüche, **dadurch gekennzeichnet, dass** das Heizelement in Form eines Paneels (1) mit einem Photovoltaikpaneel (8) kombiniert ist, um Wärme von dem Photovoltaikpaneel in dem Paneel (1) zu gewinnen.

10. Verwendung eines Solarheizsystems nach mindestens einem der Ansprüche 1 bis 9 zum Erhitzen des Wassers in einem Schwimmbecken.

11. Solarheißwasserbereiter, **dadurch gekennzeichnet, dass** er ein Solarheizsystem nach mindestens einem der Ansprüche 1 bis 9 umfasst, das mit einem Sammelbehälter für das erhitzte Brauchwasser angeschlossen ist.

## Claims

1. Solar heating system for heating domestic water or a heat transfer heating fluid, comprising at least one heating element installed on the outside of a building and intended to receive solar energy for heating by heat exchange said domestic water or said heat transfer heating fluid, said heating element being in the form of a heat absorbing panel (1), said panel (1) being formed by a first plate (A) and a second plate (B) connected to said first plate (A), said first plate (A) and said second plate (B) being profiled symmetrically so as form, between said first plate (A) and said second plate (B), outside contact zones between said first plate (A) and said second plate (B), a flow channel (3) with a fluid inlet (E) and a fluid outlet (S) for the passage of said domestic water or of said heat transfer heating fluid to be heated flowing in said panel (1), wherein said first plate (A) and said second plate (B) are stamped steel plates and are connected together by welding over the entire surface of said contact zones between said first plate (A) and said second plate (B), wherein said weld between said plates (A, B) is a laser
**weld,characterized in that** a surface texture obtained by laser processing is present on at least one of said first plate (A) or said second plate (B), **and in that** said surface texture obtained by laser processing is present on an outer surface of said first plate (A) or said second plate (B) of said panel (1), said outer surface being able to receive said solar energy.

2. Solar heating system according to claim 1, **characterized in that** said surface texture obtained by laser processing is also present on a surface in contact with said domestic water or said heat transfer heating fluid of at least one of said first plate (A) and/or said second plate (B) to increase the heat exchange surface between said panel (1) and said domestic water or said heat transfer heating fluid to be heated.

3. Solar heating system according to at least one of the preceding claims, **characterized in that** said flow channel (3) is arranged in serpentine form.

4. Solar heating system according to at least one of the preceding claims, **characterized in that** said first plate (A) and said second plate (B) each have a thickness in the range of 1 to 5mm.

5. Solar heating system according to at least one of the preceding claims, **characterized in that** said flow channel (3) has a width in the range of 3 to 10cm and a height in the range of 2 to 4mm.

6. Solar heating system according to at least one of the preceding claims, **characterized in that** one end of said flow channel (3) of a panel (1) connected with said fluid inlet (E) and the other end of said flow channel (3) of said panel (1) connected to said fluid outlet (S) of said panel (1) are connectable to a system for supplying domestic water to be heated or a circulation system for heat transfer heating fluid to be heated.

7. Solar heating system according to at least one of the preceding claims, **characterized in that** several panels (1) are fluidly connectable to one another.

8. Solar heating system according to at least one of the preceding claims, **characterized in that** attachment means (4) are arranged at the edge of said panel (1) for mounting it on structural support elements.

9. Solar heating system according to at least one of the preceding claims, **characterized in that** said heating element in the form of a panel (1) is combined with a photovoltaic panel (8) so as to recover heat from said photovoltaic panel in the panel (1).

10. Use of a solar heating system according to at least one of claims 1 to 9 for heating the water of a swimming pool.

11. Solar water heater, **characterized by** the fact that it comprises a solar heating system according to at least one of claims 1 to 9 associated with a tank for collecting heated domestic water.
